# EUROPEAN PATENT SPECIFICATION

(11) **EP 3 943 716 B1**
(45) Date of publication and mention of the grant of the patent: **20.11.2024**
(21) Application number: 21185174.6
(22) Date of filing: 12.07.2021
(51) Int. Cl.: F01D 25/30, F02C 6/18, F16K 1/22

(54) **EXHAUST CONTROL DAMPER SYSTEM FOR DUAL CYCLE POWER PLANT**
ABGASSTEUERUNGSDÄMPFERSYSTEM FÜR EIN KRAFTWERK MIT DUALEM KREISLAUF
SYSTÈME D'AMORTISSEUR DE CONTRÔLE DES GAZ D'ÉCHAPPEMENT POUR CENTRALE ÉLECTRIQUE À DOUBLE CYCLE

(30) Priority: 23.07.2020 US 202016936470
(43) Date of publication of application: 26.01.2022
(73) Proprietor: General Electric Technology GmbH, 5400 Baden (CH)
(72) Inventor: BERNAL LAMO, Juan Carlos, 110121 Bogotá (CO); SOTO PEREZ, Jesus Wilfrido, 76146 Santiago de Queretaro (MX); RUELAS MAQUERA, Javier, 04013 Sachaca (PE); BORTOLUZZI, Cicero Borges, 05095-035 São Paulo (BR)
(74) Representative: Novagraaf Group

(56) References cited:
- AU-B2- 623 060
- CN-A- 105 351 540
- KR-A- 20100 034 739
- US-A1- 2020 102 855
- US-A1- 2020 102 856
- US-B2- 10 480 420

## Description

### TECHNICAL FIELD

The disclosure relates generally to dual cycle power plants and, more particularly, to a damper system including sets of louvered dampers and an air insertion system for controlling gas turbine exhaust parameters for a heat recovery system.

### BACKGROUND

Dual cycle power plants include a power generation system that creates excess heat that can be used for other purposes. For example, a cogeneration plant creates power and excess heat that can be used for other purposes. Similarly, combined cycle power plants (CCPP) include a gas turbine (GT) system that creates power and excess heat that can be used to create steam for a steam turbine (ST) system that also creates power. In a simple cycle operation of the CCPP, the GT system is operated alone to generate power, and exhaust therefrom is directed via a diverter or bypass damper through a bypass exhaust stack. The bypass exhaust stack may include any variety of environmental exhaust treatment systems that treat the exhaust gas prior to exiting it to the atmosphere. In the combined cycle operation of the CCPP, the hot exhaust from the GT system is directed by the bypass damper to a heat recovery system, e.g., a heat recovery steam generator, to create steam for the ST system, prior to it being exhausted to the atmosphere. In the combined cycle, both the GT system and the ST system generate power.

An ST system startup ideally includes gradually increasing temperature of the system to prevent damage to the system. The ST system temperature is increased through, among other things, controlling the amount of steam created by the heat recovery system and applied to the ST system. The bypass damper used to re-direct GT system exhaust from the exhaust stack to the heat recovery system may include a single or double blade closure or a flap valve. The blade(s) either swing open or closed on an end pivot point or slide open/closed (the latter may be referred to as a guillotine damper). The bypass damper is typically designed to be in an open or a closed position.

In operation, the GT system creates hot exhaust and, when the ST system is ready to start, the bypass damper is opened, exposing the heat recovery system to the hot exhaust to create steam for the ST system. This all-or-nothing approach makes a gradual, controlled startup of the ST system challenging and exposes the components upstream of the heat recovery system and in the heat recovery system to potentially severe thermal stress during rapid heating. The severe stresses can reduce the usable lifetime of these components.
By way of example, US 2020/102855 A1 describes an emissions reduction system for a combined cycle power plant having a gas turbine engine and a heat recovery steam generator (HRSG). Further, KR 2010 0034739 A describes an H-beam tandem damper for blocking high pressure and high temperature gas for blocking environmental contamination due to the leak of the toxic gas and prevent damage to and thermal expansion deformation of a damper and a blade due to hot air current and gas.

In order to address these challenges, in one approach, exhaust temperature control is provided by controlling the output of the GT system, but this approach may disadvantageously reduce plant output and power availability. In another approach, the bypass damper is used to attempt to control, among other aspects, the mass flow of the exhaust to the heat recovery system by positioning the bypass damper in a partially open position, e.g., 10%, 20%, etc. This method and structure pose a number of shortcomings. Notably, the blade bypass damper does not provide sufficient control of the exhaust flow because it includes no more than one or two blades that are only really capable of either an open or closed position. In any of the partially open positions, the one or two blades lack sufficient control of the application of back pressure in the GT system, which is advantageous during fast start or cycling operation. In addition, in between the closed and opened settings, current bypass dampers can cause, among other issues, reverse flow or turbulence in the exhaust, creating uneven heat transfer in the heat recovery system. The inability to control the rate of heating of the heat recovery system caused by the current bypass damper thus presents difficult challenges to controlling the temperature of an ST system, e.g., during startup.

Another shortcoming of current bypass dampers is the minimal mass flow control for the exhaust entering the heat recovery system. The lack of better mass flow control can also lead to difficulty controlling the heating of the heat recovery system and volume of steam it generates.

### BRIEF DESCRIPTION

An exhaust control damper system for a combined cycle power plant in accordance with the invention as hereinafter claimed comprises the features of claim 1 below.

A power plant in accordance with the invention as hereinafter claimed comprises the features of claim 10 below.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic view of an illustrative power plant including an exhaust control damper system, according to embodiments of the disclosure;
FIG. 2 shows a perspective view of the exhaust control damper system, according to embodiments of the disclosure;
FIG. 3 shows an end view of the exhaust control damper system, according to embodiments of the disclosure;
FIG. 4 shows an enlarged perspective view of sets of louvered dampers of the exhaust control damper system, according to embodiments of the disclosure;
FIG. 5 shows a schematic view of an illustrative power plant including the exhaust control damper system replacing a bypass damper, according to embodiments of the disclosure; and
FIG. 6 shows an enlarged perspective view of two sets of louvered dampers of the exhaust control damper system, according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current disclosure, it will become necessary to select certain terminology when referring to and describing relevant machine components within a power plant. To the extent possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the exhaust from a gas turbine or, for example, the flow of exhaust from a damper system towards a heat exchanger. The term "downstream" corresponds to the direction of flow of the fluid, and the term "upstream" refers to the direction opposite to the flow (i.e., the direction from which the flow originates). The terms "forward" and "aft," without any further specificity, refer to directions, with "forward" referring to the front or compressor end of the engine, and "aft" referring to the rearward section of the turbomachine.

It is often required to describe parts that are disposed at differing radial positions with regard to a center axis. The term "radial" refers to movement or position perpendicular to an axis. For example, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. The term "axial" refers to movement or position parallel to an axis. Finally, the term "circumferential" refers to movement or position around an axis. It will be appreciated that such terms may be applied in relation to the center axis of the turbine.

In addition, several descriptive terms may be used regularly herein, as described below. The terms "first", "second", and "third" may be used interchangeably to distinguish one component from another and are not intended to signify location or importance of the individual components.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components but do not preclude the presence or addition of one or more other features, integers, steps, operations, elements, components, and/or groups thereof. "Optional" or "optionally" means that the subsequently described event or circumstance may or may not occur or that the subsequently describe component or element may or may not be present, and that the description includes instances where the event occurs or the component is present and instances where it does not or is not present.

Where an element or layer is referred to as being "on," "engaged to," "connected to" or "coupled to" another element or layer, it may be directly on, engaged to, connected to, or coupled to the other element or layer, or intervening elements or layers may be present. In contrast, when an element is referred to as being "directly on," "directly engaged to," "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Embodiments of the disclosure provide an exhaust control damper system for a power plant, such as a cogeneration plant or a combine cycle power plant (CCPP). The damper system includes a frame configured to be fluidly coupled in an exhaust flow path from a gas turbine (GT) system to a heat recovery system. The damper system includes at least two sets of louvered dampers in the frame, which collectively cover the exhaust flow path. Each set of louvered dampers includes a plurality of blades collectively angularly positionable in one of a fully open position, a fully closed position, and a partially open position. The sets of louvered dampers can be modulated to control gas flow distribution to a heat recovery system, such as a heat recovery steam generator. The damper system also provides improved mass flow control of exhaust to the heat recovery system by controlling the position of the different sets of louvered dampers. The damper system can be added to a conventional bypass system or can replace a conventional bypass system in a retrofit setting.

An air insertion system is operatively coupled to the frame and configured to insert an airflow into the exhaust flow path. The air insertion system may mix air with the exhaust flow to the heat recovery system to control the exhaust temperature entering the heat recovery system. The air insertion system allows reduction of thermal stresses on components and provides controlled temperature startup of the ST system without degrading efficiency of the GT system. Hence, the GT system can be started in simple cycle mode, and later the heat recovery system can be started with controlled gas temperature and mass flow according to the heat recovery system and the ST system requirements (gradually higher temperatures, lower thermal stress, etc.).

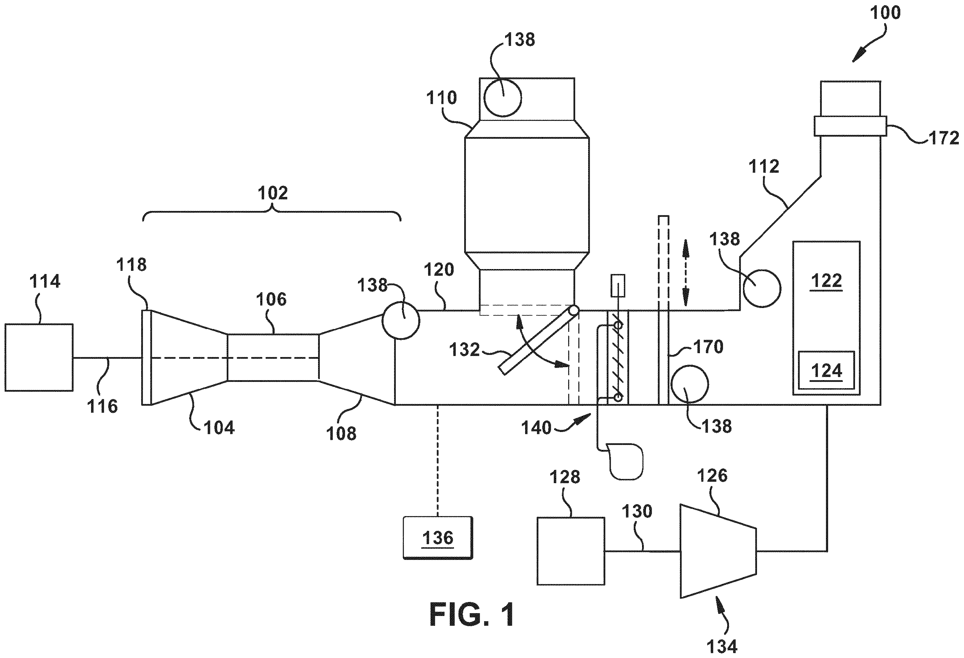

FIG. 1 illustrates a power plant 100 according to an embodiment of the present disclosure. Power plant 100 may include a gas turbine (GT) system 102 and a steam turbine (ST) system 134. GT system 102 may include a compressor 104, a combustor 106, and a gas turbine 108. Power plant 100 may also include a bypass stack 110 and a heat recovery system 112. While single components are illustrated in FIG. 1, embodiments of this disclosure are not so limited and may include a plurality of compressors, combustors, turbines, bypass stacks, and/or heat recovery systems connected in series and/or in parallel. In one embodiment, GT system 102 is a 7HA.03 engine, commercially available from General Electric Company, Greenville, S.C. The present disclosure is not limited to any one particular GT system and may be implanted in connection with other engines including, for example, the other HA, F, B, LM, GT, TM and E-class engine models of General Electric Company, and engine models of other companies.

Gas turbine 108 may be coupled to compressor 104 and/or a generator 114 through one or more shafts 116. During operation, compressor 104 may receive air via an inlet filter 118, compress the air, and supply compressed air to combustor 106. In combustor 106, fuel such as natural gas may be introduced and burned to generate hot combustion gases. The combustion gases may be discharged to gas turbine 108 that is rotationally driven due to the expansion of the combustion gases. The rotation of gas turbine 108 may be used to rotate generator 114 through shaft 116 to generate power.

Gas turbine 108 may be coupled to exhaust bypass stack 110 and heat recovery system 112 via an exhaust duct 120. Exhaust duct 120 may include an inlet coupled to the exhaust outlet of gas turbine 108 to receive the high temperature exhaust gas from gas turbine 108. Exhaust duct 120 may include a first outlet coupled to exhaust bypass stack 110 and a second outlet coupled to heat recovery system 112. Exhaust bypass stack 110 may receive the high temperature exhaust gas and direct it outside of power plant 100, e.g., through any now known or later developed cleaning systems.

Heat recovery system 112 may receive the high temperature exhaust gas (hereinafter "exhaust"), recover heat from the exhaust, heat water, and produce steam. Heat recovery system may also be referred to as a heat recovery steam generator (HRSG), where appropriate. Heat recovery system 112 may include a boiler 122 to generate the steam. In one embodiment, heat recovery system 112 may include a supplementary fire duct burner 124 in boiler 122. The steam may be directed to a ST system 134 configured to rotate due to the steam. The rotation of a steam turbine 126 of ST system 134 may rotate a generator 128 through shaft 130 to generate additional power. In other embodiments, the steam from heat recovery system 112 may be used for other applications (e.g., heating or desalination).

As illustrated in FIG. 1, exhaust duct 120 may include a bypass damper 132 inside of exhaust duct 120. Bypass damper 132 may be a sandwich-type flap, with independent expandable double skin blades. The blades may be actuated by a toggle lever system and powered by hydraulics controls. Bypass damper 132 and the drive components for bypass damper 132 may be manufactured from materials that can withstand the exhaust gas environment. Bypass damper 132 may be controlled to direct the flow of exhaust to exhaust bypass stack 110 or to heat recovery system 112. Bypass damper 132 may be configured to completely shut off the flow of exhaust gas to exhaust bypass stack 110 or to heat recovery system 112. For example, a controller 136 may control the position of bypass damper 132 to be in a first position (vertical) to shut off the flow of exhaust to heat recovery system 112. Controller 136 may control the position of bypass damper 132 to be in a second potion (horizontal) to shut off the flow of the exhaust to exhaust bypass stack 110.

While a flat type bypass damper 132 is illustrated in FIG. 1, the embodiments of this disclosure are not so limited, and other types of dampers may be used to stop the flow of exhaust to exhaust bypass stack 110 and/or to heat recovery system 112. For example, a bi-plane damper may be installed at the outlets of exhaust duct 120 and/or the inlets to exhaust bypass stack 110 and/or to heat recovery system 112. In another embodiment, a guillotine damper or blanking plate may be used to control the flow of the exhaust.

Power plant 100 may include one or more sensors 138 to monitor the operation of the power plant. Sensors 138 may monitor the temperature, moisture, flow speed, and/or exhaust composition. Controller 136 of power plant 100 may receive data from sensors 138, analyze the data to determine the operating state of the power plant, and generate controls for the power plant based on the received data from sensors 138.

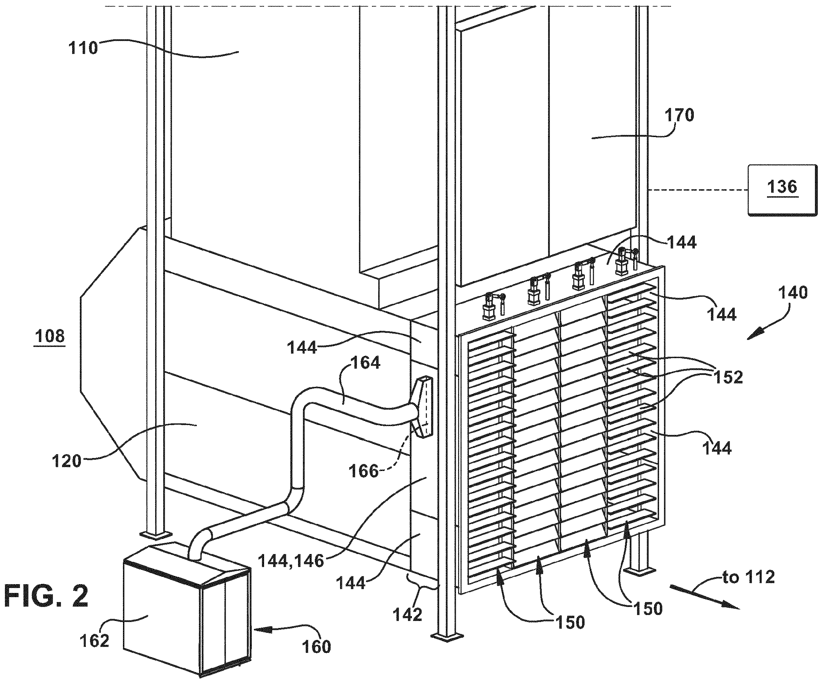

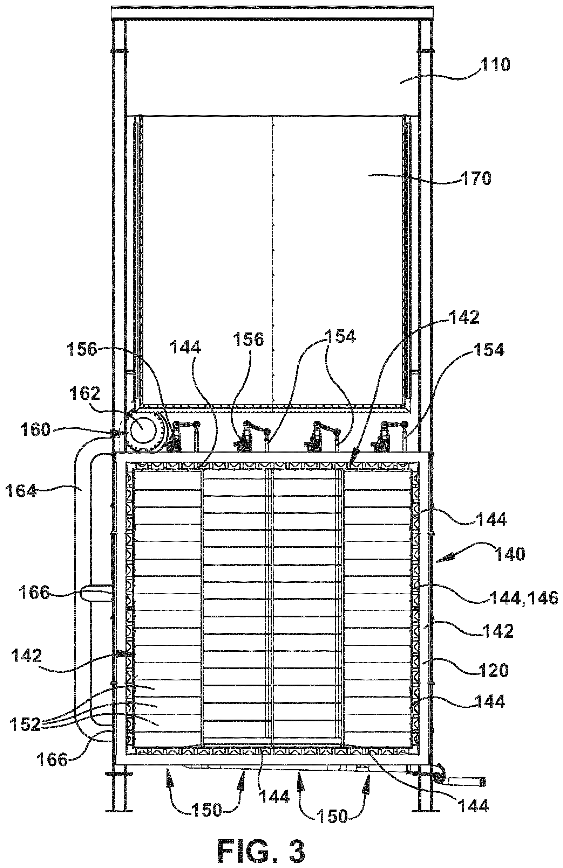

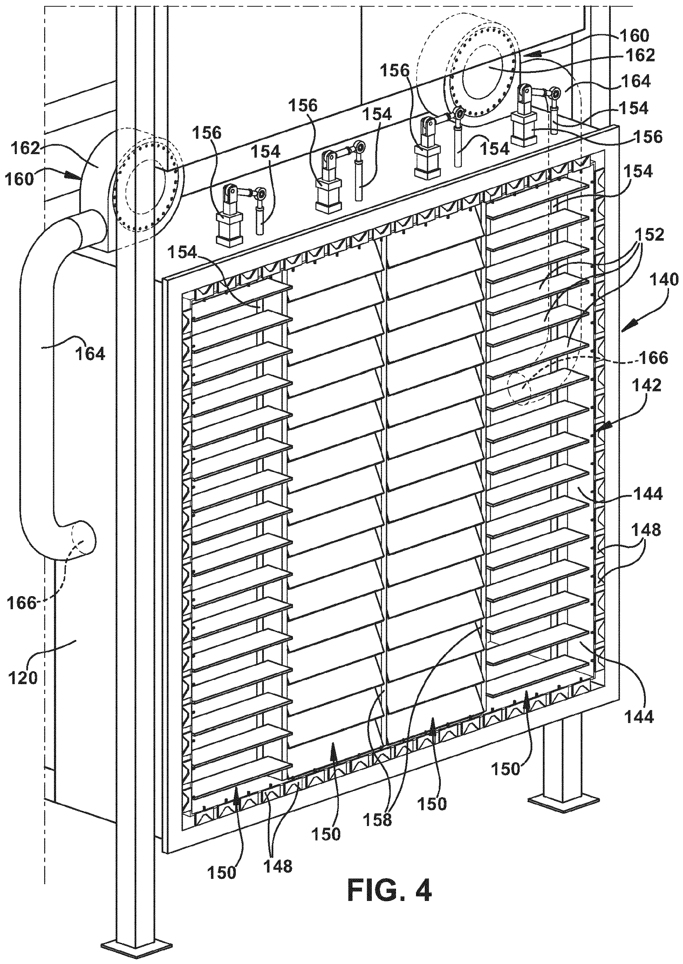

Power plant 100 may further include an exhaust control damper system 140 (hereinafter "damper system 140") to provide additional control over exhaust prior to its introduction to heat recovery system 112. FIG. 2 shows a perspective view, FIG. 3 shows an end view, and FIG. 4 shows an enlarged perspective view of damper system 140 fluidly coupled to exhaust duct 120.

Damper system 140 includes a frame 142 configured to be fluidly coupled in an exhaust flow path from GT system 108 (FIG. 1) to heat recovery system 112. The exhaust flow path may include any now known or later developed duct or enclosed pathway. Frame 142, which may be configured to direct the flow of exhaust between bypass damper 132 (FIG. 1) and heat recovery system 112, houses portions of damper system 140. Frame 142 may be positioned adjacent to and downstream of bypass damper 132. Frame 142 may be included in exhaust duct 120 or in heat recovery system 112.

As shown in FIG. 2, frame 142 may provide the outermost part of exhaust duct 120, i.e., it is inserted as part of exhaust duct 120, or as shown in FIGS. 3, 4 and 6, it may be mounted within a portion of exhaust duct 120, e.g., spaced within exhaust duct 120 by supports 148. In either case, frame 142 may include any number of plate members 144 configured to create a duct of the same or similar shape and dimensions as the location in which it is positioned. In FIG. 2, for example, one plate member 144 creates each of the bottom and top of frame 142, and three plate members 144 create each of the sides of frame 142. Frame 142 may be made of any material capable of withstanding the environment of the exhaust.

Frame 142 may be coupled to a new power plant 100 or may be retrofitted to an existing power plant 100. To this end, frame 142 has an adjustment member 146 configured to allow adjustment of a size of the frame. Adjustment member(s) 146 may include any now known or later developed structure for allowing frame 142 to have different sizes to accommodate different sized exhaust ducts 120 and/or heat recovery systems 112. In one non-limiting example, adjustment member 146 may include a selection from a variety of different length plate members.

Damper system 140 also includes at least two sets of louvered dampers 150 in frame 142, which collectively cover the exhaust flow path. Each set of louvered dampers 150 includes a plurality of blades or vanes 152 collectively angularly positionable in one of: a fully open position (shown in outer two in FIG. 2), a fully closed position (shown in outer two in FIG. 3), and a partially open position (shown in middle two in FIG. 2). The partially open position may include any angular position of blades 152 between the fully open and fully closed position, e.g., 25%, 50%,75%, etc. Sets of louvered dampers 150 may have the same setting or may have different settings. Each set of louvered dampers 150 may include a position transmission 154 configured to adjust an angular position of a respective plurality of blades 152 independently of the other set(s) of louvered dampers 150. Position transmission 154 may include any now known or later developed mechanism for simultaneously changing the angular position of a plurality of blades 152, such as, but not limited to, an elongated member pivotally coupled to each vane and linearly movable to change the angular position.

Each set of louvered dampers 150 may also include an actuator 156 configured to control operation of position transmission 154 to position the respective set of louvered dampers 150 in the one of: the fully open position, the fully closed position, and the partially open position. Controller 136 may control each actuator 156 to control, among other things, the mass flow of exhaust through frame 142. Actuator(s) 156 may include any appropriate motorized actuator, e.g., electric, hydraulic, pneumatic, etc., capable of moving the position transmission 154. For example, actuator(s) 156 may be rotational actuators (shown in FIG. 4) capable of pivotally coupling to and linearly moving position transmissions 154 vertically to change the angular position of blades 152, or they could be linear actuators coupled to and linearly moving position transmissions 154 vertically to change the angular position of blades 152. Other varieties of actuators may also be employed depending on the type of position transmission 154.

While four sets of louvered dampers 150 are shown in each of FIGS. 2-4, any number of sets may be employed. For example, at least two or at least three sets of louvered dampers 150 may be employed. Plurality of blades 152 of each set of louvered dampers 150 includes any number capable of providing the desired mass flow controls for the exhaust. That is, blades 152 have sufficient numbers to provide more than just an open/closed passage; they provide controlled flow restriction capable of controlling the mass flow of exhaust to heat recovery system 112 and back pressure on GT system 102. In one non-limiting example, plurality of blades 152 includes at least ten vertically spaced damper blades, but any number sufficient to provide the desired flow restriction is possible.

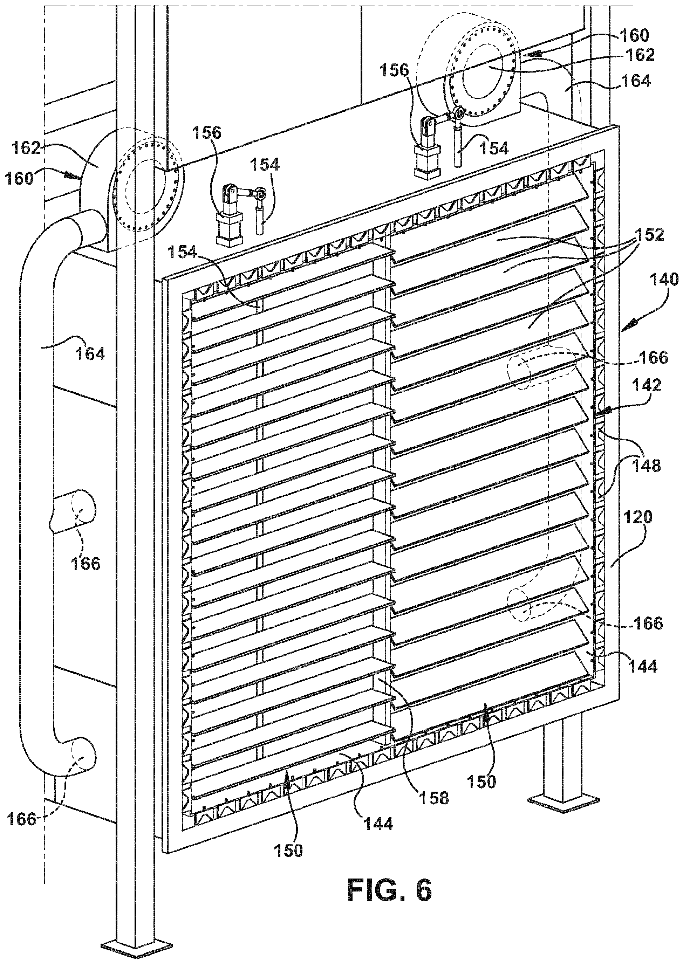

In the example shown, blades 152 are vertically spaced and rotate about a horizontal axis. It is readily understood that the blades 152 could also be horizontally spaced and rotate about a vertical axis, i.e., with actuators 156 on the side of frame 142. As shown for example in FIGS. 4 and 6, each set of louvered dampers 150 may be separated by a section 158 of frame 142, but this is not necessary in all cases (see FIG. 3).

Damper system 140 also includes an air insertion system 160 (FIGS. 2-3) operatively coupled to frame 142 and configured to insert an airflow into the exhaust flow path. Air insertion system 160 may include an air pump 162 having an output, and a conduit 164 fluidly coupling the output of air pump 162 to at least one opening 166 in frame 142 in fluid communication with the exhaust flow path. Conduit 164 can include any form of piping capable of withstanding the environment within power plant 100 and of directing the airflow to the desired locations. FIG. 2 shows one opening 166, and FIGS. 3, 4 and 6 show a plurality of openings 166 spaced along at least a portion of frame 142, e.g., one side. While particular arrangements of openings have been illustrated, any number of openings 166 can be provided in any arrangement about frame 142. Each opening 166 is configured to insert an airflow from air pump 162 into the exhaust flow path.

In FIG. 2, air pump 162 is disposed aside frame 142, and in FIGS. 3, 4 and 6, air pump(s) 162 are mounted on frame 142. Any number of air pumps 162 may be used. FIGS. 2 and 3 show one air pump 162, and FIGS. 4 and 6 show a pair of air pumps 162. The air can be taken from the atmosphere about power plant 100 or from compressor 104 (FIG. 1). In one embodiment, sensor 138 measures the temperature of the exhaust flow (gas). Based on the temperature, controller 136 can control air pump 162 to deliver an amount of air that, when mixed with the rest of the exhaust flow in and/or downstream of frame 142, creates a desired exhaust temperature for heat recovery system 112.

As shown in FIG. 1, power plant 110 may also include isolator 170 to isolate air or air/gas mixture from heat recovery system 112. Isolator 170 may be a guillotine damper or blanking plate that is configured to isolate bypass damper 132 and damper system 140 from heat recovery system 112. Isolator 170 may be positioned adjacent to damper system 140 (shown) or bypass damper 132. Isolator 170 may be included in exhaust duct 120 or in heat recovery system 112. Isolator 170 may be a bolted plate supplied along with diverter bypass damper 132 and/or damper system 140 and may remain in place before operating heat recovery system 112 to allow power plant 100 to operate in the simple cycle. In one embodiment, isolator 170 may not provide thermal insulation.

During operation, power plant 100 may be controlled to operate in a simple cycle to generate energy only from the operation of gas turbine 108 or in a combined cycle to generate energy from the operation of gas turbine 108 and heat recovery system 112. In the simple cycle, bypass damper 132 may be controlled to be in the first position (vertical) to shut off the flow of exhaust to heat recovery system 112. In the simple cycle, the exhaust from gas turbine 108 may flow to exhaust bypass stack 110 via exhaust duct 120.

In the combined cycle, bypass damper 132 may be controlled to be in the second position (horizontal) to shut off the flow of exhaust to exhaust bypass stack 110. In the combined cycle, the exhaust from gas turbine 108 may flow to damper system 140, and eventually to heat recovery system 112 via exhaust duct 120, to recover additional energy from the exhaust gas. Damper system 140 controller 136 is configured to control the position of sets of louvered dampers 150 and the operation of air insertion system 160 to control at least one of: an exhaust flow temperature downstream of frame 142; an exhaust mass flow rate downstream of frame 142; and a back pressure upstream of frame 142, i.e., on GT system 108. Controller 136 may be part of power plant 100 control system or a separate controller.

When starting up power plant 100, the power plant may be set in simple cycle or combined cycle. For startup in the simple cycle, bypass damper 132 may be set in the first position (vertical) to shut off the flow of exhaust to heat recovery system 112 and to allow the generated exhaust to flow to exhaust bypass stack 110. After the start-up of gas turbine 108, the exhaust is introduced into exhaust duct 120 and all of the exhaust flows outside of power plant 100 via exhaust bypass stack 110. After predetermined conditions are satisfied (e.g., predetermined time period, temperature, composition of the exhaust gas), bypass damper 132 may be controlled to transition to a second position (horizontal) to allow the exhaust to flow to heat recovery system 112 and to block the exhaust from flowing to exhaust bypass stack 110.

During the transition from the first position to the second position, a portion of the exhaust may flow to heat recovery system 112 and a portion of the exhaust may flow to exhaust bypass stack 100. By controlling the speed of the transition, the amount of exhaust introduced into heat recovery system 112 may be controlled in a limited manner by bypass damper 132 to reduce stress on the components of heat recovery system 112 due to a drastic temperature change. In accordance with embodiments of the disclosure, damper system 140 may be operated to provide further control of the exhaust flow to reduce stress on components of heat recovery system 112, both during the transition and after the transition. Thus, damper system 140 may reduce hazards to heat recovery system 112 of power plant 100, created by the lack of fine-tuned control of bypass damper 132.

For example, damper system 140 can guard against over-pressure or under-pressure in exhaust duct 120. Damper system 140 can also remove turbulence and better control mass flow of exhaust to heat recovery system 112. Air insertion system 160 allows control of exhaust temperature, providing further protection against thermal stress to heat recovery system 112 or upstream components. Damper system 140 may also be controlled with bypass damper 132 and stack damper 172 of heat recovery system 112, e.g., to reduce the possibility of overpressure in exhaust duct 120.

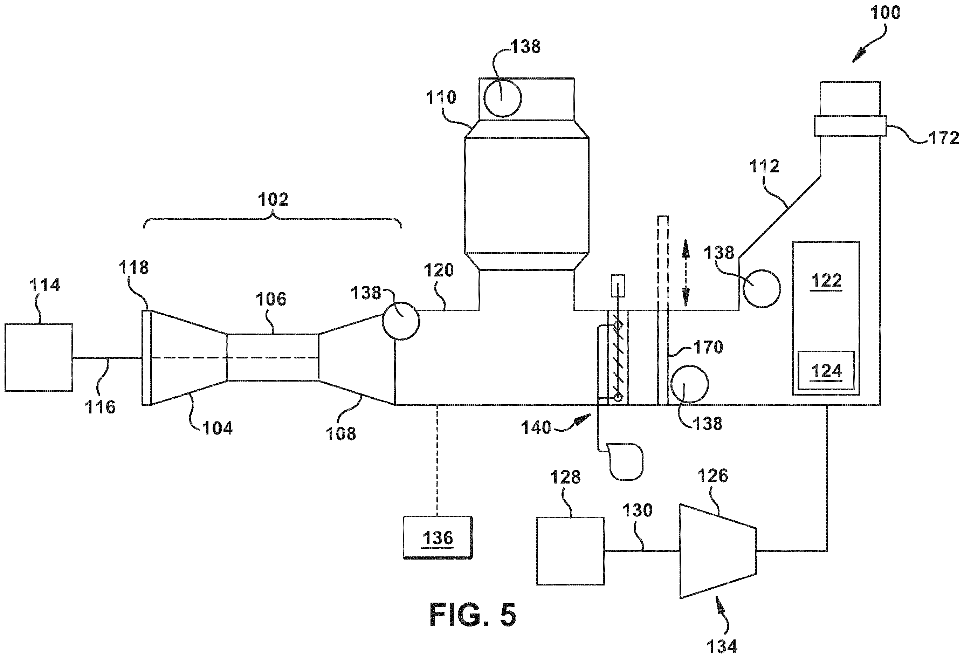

In another embodiment, shown in FIG. 5, damper system 140, perhaps in conjunction with isolator 170, may replace bypass damper 132, thus removing any disadvantage provided by bypass damper 132. In another embodiment, shown in FIG. 6, only two sets of louvered dampers 150 are used.

Embodiments of the disclosure provide an exhaust control damper system 140 that can provide additional exhaust control for heat recovery system 112. Damper system 140 can provide better back pressure control in GT system 102 than a bypass damper 132, even those bypass dampers 132 using multiple gates. For example, the system provides less back-pressure in GT system 102 during fast-start or cycling operation. Hence, the system allows fast startup of the GT system 102 while reducing any potential thermal stress on heat recovery system 112. Damper system 140 is also more reliable than single blade bypass dampers that may create turbulence or flow reversal at partial opening. Damper system 140 further provides improved control of exhaust mass flow to heat recovery system 112, providing more control of ST system 134 startup. Damper system 150 is flexible, adjustable, and easy to install in any configuration or power plant framework either as a new build or as a retrofit. Many modifications and variations will be apparent to those of ordinary skill in the art without departing from the scope of the disclosure. The embodiment was chosen and described in order to best explain the principles of the disclosure and the practical application and to enable others of ordinary skill in the art to understand the disclosure for various embodiments with various modifications as are suited to the particular use contemplated.

## Claims

1. An exhaust control damper system (140) for a combined cycle power plant (100), the damper system (140) comprising:
a frame (142) configured to be fluidly coupled in an exhaust flow path from a gas turbine (108) (GT) system to a heat recovery system (112);
at least two sets of louvered dampers (150) in the frame (142) and collectively covering the exhaust flow path, each set of louvered dampers (150) including a plurality of blades (152) collectively angularly positionable in one of: a fully open position, a fully closed position and a partially open position; and
an air insertion system (160) operatively coupled to the frame (142) and configured to insert an airflow into the exhaust flow path; **characterized in that**
the frame (142) has an adjustment member (146) configured to allow adjustment of a size of the frame (142).

2. The damper system (140) of claim 1, wherein each set of louvered dampers (150) includes:
a position transmission (154) configured to adjust an angular position of a respective plurality of blades (152); and
an actuator (156) configured to control operation of the position transmission (154) to position the respective set of louvered dampers (150) in the one of: the fully open position, the fully closed position, and the partially open position.

3. The damper system (140) of claim 1, wherein air insertion system (160) includes:
an air pump (162) having an output; and
a conduit (164) fluidly coupling the output of the air pump (162) to at least one opening (166) in the frame (142) in fluid communication with the exhaust flow path, the at least one opening (166) configured to insert an airflow from the air pump (162) into the exhaust flow path.

4. The damper system (140) of claim 3, wherein the at least one opening (166) includes a plurality of openings (166) spaced along at least a portion of the frame (142).

5. The damper system (140) of claim 3, wherein the air pump (162) includes a pair of air pumps (162).

6. The damper system (140) of claim 1, wherein the at least two sets of louvered dampers (150) includes at least three sets of louvered dampers (150).

7. The damper system (140) of claim 1, wherein the plurality of blades (152) of each set of louvered dampers (150) includes at least ten vertically spaced damper blades (152).

8. The damper system (140) of claim 1, further comprising a controller (136) configured to control a position of the at least two sets of louvered dampers (150) and operation of the air insertion system (160) to control at least one of: an exhaust flow temperature downstream of the frame (142); an exhaust mass flow rate downstream of the frame (142); and a back pressure upstream of the frame (142).

9. The damper system (140) of claim 1, wherein the frame (142) is mounted within a portion of an exhaust duct (120).

10. A combined cycle power plant (100), comprising:
a gas turbine (108) (GT) system;
a steam turbine (126) (ST) system;
a heat recovery steam generator (112) operatively coupled to the GT system (102) and the ST system (104);
an exhaust control damper system (140) according to one of claims 1 through 9.

## Patentansprüche

1. Abgasregelklappensystem (140) für ein Kombikraftwerk (100), wobei das Klappensystem (140) Folgendes umfasst:
einen Rahmen (142), der so konfiguriert ist, dass er in einem Abgasströmungsweg von einem Gasturbinensystem (GT-System) (108) zu einem Wärmerückgewinnungssystem (112) strömungsmäßig gekoppelt ist;
mindestens zwei Sätze von Jalousieklappen (150) in dem Rahmen (142), die gemeinsam den Abgasströmungsweg abdecken, wobei jeder Satz von Jalousieklappen (150) eine Vielzahl von Blättern (152) einschließt, die gemeinsam in einer der folgenden Positionen winklig positionierbar sind: einer vollständig geöffneten Position, einer vollständig geschlossenen Position und einer teilweise geöffneten Position; und
ein Lufteinführungssystem (160), das betriebsmäßig mit dem Rahmen (142) verbunden ist und so konfiguriert ist, dass es einen Luftstrom in den Abgasströmungsweg einführt; **dadurch gekennzeichnet, dass**
der Rahmen (142) ein Einstellelement (146) aufweist, das so konfiguriert ist, dass es eine Anpassung der Größe des Rahmens (142) ermöglicht.

2. Klappensystem (140) nach Anspruch 1, wobei jeder Satz von Jalousieklappen (150) Folgendes einschließt:
eine Positionsübertragung (154), die so konfiguriert ist, dass sie eine Winkelposition einer jeweiligen Vielzahl von Blättern (152) einstellt; und
einen Aktuator (156), der so konfiguriert ist, dass er den Betrieb des Positionsgetriebes (154) steuert, um den jeweiligen Satz von Jalousieklappen (150) in eine der folgenden Positionen zu bringen: die vollständig geöffnete Position, die vollständig geschlossene Position oder die teilweise geöffnete Position.

3. Klappensystem (140) nach Anspruch 1, wobei das Lufteinführungssystem (160) Folgendes einschließt:
eine Luftpumpe (162) mit einem Ausgang; und
eine Leitung (164), die den Ausgang der Luftpumpe (162) mit mindestens einer Öffnung (166) in dem Rahmen (142) in Fluidverbindung mit dem Abgasströmungsweg verbindet, wobei die mindestens eine Öffnung (166) so konfiguriert ist, dass sie einen Luftstrom von der Luftpumpe (162) in den Abgasströmungsweg einleitet.

4. Klappensystem (140) nach Anspruch 3, wobei die mindestens eine Öffnung (166) eine Vielzahl von Öffnungen (166) einschließt, die entlang mindestens eines Teils des Rahmens (142) beabstandet sind.

5. Klappensystem (140) nach Anspruch 3, wobei die Luftpumpe (162) ein Paar von Luftpumpen (162) umfasst.

6. Klappensystem (140) nach Anspruch 1, wobei die mindestens zwei Sätze von Jalousieklappen (150) mindestens drei Sätze von Jalousieklappen (150) einschließen.

7. Klappensystem (140) nach Anspruch 1, wobei die Vielzahl von Blättern (152) jedes Satzes von Jalousieklappen (150) mindestens zehn vertikal beabstandete Klappenblätter (152) einschließt.

8. Klappensystem (140) nach Anspruch 1, ferner umfassend eine Steuerung (136), die so konfiguriert ist, dass sie eine Position der mindestens zwei Sätze von Jalousieklappen (150) und den Betrieb des Lufteinführungssystems (160) steuert, um mindestens eines zu steuern von: einer Abgasströmungstemperatur stromabwärts des Rahmens (142); einer Abgasmassenströmungsrate stromabwärts des Rahmens (142); und einem Gegendruck vor dem Rahmen (142).

9. Klappensystem (140) nach Anspruch 1, wobei der Rahmen (142) innerhalb eines Abschnitts eines Abgaskanals (120) montiert ist.

10. Kombikraftwerk (100), umfassend:
ein Gasturbinensystem (GT-System) (108);
ein Dampfturbinensystem (ST-System) (126);
einen Wärmerückgewinnungsdampferzeuger (112), der betriebsmäßig mit dem GT-System (102) und dem ST-System (104) gekoppelt ist;
ein Abgasregelklappensystem (140) nach einem der Ansprüche 1 bis 9.

## Revendications

1. Système d'amortisseur (140) de réglage d'échappement pour une centrale à cycles combinés (100), le système d'amortisseur (140) comprenant :
un cadre (142) conçu pour être accouplé fluidiquement dans une voie d'écoulement d'échappement à partir d'un système de turbine à gaz (GT) (108) vers un système de récupération de chaleur (112) ;
au moins deux ensembles d'amortisseurs à persiennes (150) dans le cadre (142) et couvrant collectivement la voie d'écoulement d'échappement, chaque ensemble d'amortisseurs à persiennes (150) comportant une pluralité de lames (152) pouvant être positionnées angulairement collectivement dans l'une parmi : une position complètement ouverte, une position complètement fermée et une position partiellement ouverte ; et
un système d'introduction d'air (160) accouplé de manière opérationnelle au cadre (142) et conçu pour introduire un écoulement d'air dans la voie d'écoulement d'échappement ; **caractérisé en ce que**
le cadre (142) comporte un élément d'ajustement (146) conçu pour permettre l'ajustement d'une taille du cadre (142).

2. Système d'amortisseur (140) selon la revendication 1, dans lequel chaque ensemble d'amortisseurs à persiennes (150) comporte :
une transmission de position (154) conçue pour ajuster une position angulaire d'une pluralité respective de lames (152) ; et
un actionneur (156) conçu pour commander le fonctionnement de la transmission de position (154) afin de positionner l'ensemble respectif d'amortisseurs à persiennes (150) dans l'une parmi : la position complètement ouverte, la position complètement fermée et la position partiellement ouverte.

3. Système d'amortisseur (140) selon la revendication 1, dans lequel le système d'introduction d'air (160) comporte :
une pompe à air (162) ayant une sortie ; et
un conduit (164) accouplant fluidiquement la sortie de la pompe à air (162) à au moins une ouverture (166) dans le cadre (142) en communication fluidique avec la voie d'écoulement d'échappement, l'au moins une ouverture (166) étant conçue pour introduire un écoulement d'air à partir de la pompe à air (162) dans la voie d'écoulement d'échappement.

4. Système d'amortisseur (140) selon la revendication 3, dans lequel l'au moins une ouverture (166) comporte une pluralité d'ouvertures (166) espacées le long d'au moins une partie du cadre (142).

5. Système d'amortisseur (140) selon la revendication 3, dans lequel la pompe à air (162) comporte une paire de pompes à air (162).

6. Système d'amortisseur (140) selon la revendication 1, dans lequel les au moins deux ensembles d'amortisseurs à persiennes (150) comportent au moins trois ensembles d'amortisseurs à persiennes (150).

7. Système d'amortisseur (140) selon la revendication 1, dans lequel la pluralité de lames (152) de chaque ensemble d'amortisseurs à persiennes (150) comportent au moins dix lames (152) d'amortisseur espacées verticalement.

8. Système d'amortisseur (140) selon la revendication 1, comprenant en outre un dispositif de commande (136) conçu pour commander une position des au moins deux ensembles d'amortisseurs à persiennes (150) et le fonctionnement du système d'introduction d'air (160) afin de commander au moins l'un parmi : une température d'écoulement d'échappement en aval du cadre (142) ; un débit massique d'échappement en aval du cadre (142) ; et une contre-pression en amont du cadre (142).

9. Système d'amortisseur (140) selon la revendication 1, dans lequel le cadre (142) est monté à l'intérieur d'une partie d'un conduit d'échappement (120).

10. Centrale à cycles combinés (100), comprenant :
un système de turbine à gaz (GT) (108) ;
un système de turbine à vapeur (ST) (126) ;
un générateur de vapeur à récupération de chaleur (112) accouplé de manière opérationnelle au système GT (102) et au système ST (104) ;
un système d'amortisseur (140) de réglage d'échappement selon l'une des revendications 1 à 9.
